# EUROPEAN PATENT SPECIFICATION

(11) **EP 3 909 667 B1**
(45) Date of publication and mention of the grant of the patent: **22.10.2025**
(21) Application number: 21184465.9
(22) Date of filing: 31.07.2018
(51) Int. Cl.: B01D 63/08, B01D 65/10, G01N 1/10

(54) **PERMEATION TEST CELL**
PERMEATIONSTESTZELLE
CELLULE DE TEST DE PERMEANCE

(30) Priority: 03.08.2017 IT 201700089514
(43) Date of publication of application: 17.11.2021
(62) Divisional of application: 18759747.1
(73) Proprietor: Universita' Degli Studi Di Sassari, 07100 Sassari (IT)
(72) Inventor: COSSU, Massimo, 07100 SASSARI (IT); RASSU, Giovanna, 07100 SASSARI (IT); GAVINI, Elisabetta, 07100 SASSARI (IT); GIUNCHEDI, Paolo, 07100 SASSARI (IT)
(74) Representative: Celona, Antonio

(56) References cited:
- WO-A1-2017/111148
- DE-C1- 3 520 489
- US-A1- 2013 138 384
- US-B2- 7 111 503

## Description

### Field of the invention

The present invention relates to the field of devices for studying the permeation and/or diffusion of substances, in particular pharmaceuticals, through selective membranes, in particular synthetic or biological membranes such as for example, mucosas and tissues. The invention in particular relates to permeation cells, or diffusion cells, of the horizontal and vertical type.

More specifically, the invention relates to diffusion cells (or permeation cells) for *in-vitro* and *ex-vivo* pharmaceutical permeability studies.

### Background art

As is known, to study the capacity of substances to cross synthetic or biological membranes, the use is made of suitable devices comprising two compartments or chambers separated from each other by a membrane. Such devices generally are called permeation cells or diffusion cells.

They may be divided into two large categories: horizontal-diffusion cells and vertical-diffusion cells. Both may then be divided in turn into two main groups: static-diffusion cells and dynamic-diffusion cells, also called "flow-through cells".

The dynamic-diffusion cell differs from the corresponding static one for the fact that the donor liquid (only in the horizontal-diffusion chamber) and the acceptor liquid in each of the two chambers are continuously recycled or restored.

The nature of the donor may be varied with vertical-diffusion cells; the permeability of a molecule in a solution, in a powder, in a suspension, in a semisolid preparation (i.e. creams, gels) may indeed be studied.

The static cell most used in *in-vitro* permeation studies is the Franz diffusion cell (*Franz, 1978*). This vertical-diffusion cell allows *in-vitro* tests to be carried out to assess the release of pharmaceuticals from creams, gels and ointments.

Among the several dynamic-permeation cells, the in line *Bronaugh cells* (vertical-diffusion) and the *Ussing chambers* (horizontal-diffusion) are worth noting. These types of cells are broadly used both in the in-vitro studies of the passage of liquid or solution pharmaceuticals through synthetic membranes and biological tissues and for iontophoresis studies.

Both the horizontal and the vertical cells comprise two chambers, one containing the permeant and the other the recipient solution. These two compartments are separated by an artificial or biological membrane.

The liquid contained in the chambers typically is temperature stabilized (generally from 32 up to 37°C).

Disadvantageously, known permeation cells do not allow the permeation surface to be varied in an easy manner. Indeed, each permeation cell is designed to have only one permeation surface.

Further disadvantages of known permeation cells in particular are:
- low reproducibility of the data obtained;
- continuous formation of air bubbles below the membrane, especially in step of sampling and restoring the acceptor fluid, with subsequent decrease of the permeation surface and test invalidation;
- poor adaptability to transmucosal permeation studies;
- difficulty in loading the sample, in particular when it is in the form of powder or is semi-solid;
- poor visibility of the membrane during the application of the formulation;
- dispersion of the heat in the upper part of the cell, where the permeation occurs;
- cleaning difficulty at the end of the test.

Moreover, in the particular case of static cells, a saturation of the acceptor liquid may disadvantageously occur, with subsequent limitation of the type and quantities of testable pharmaceuticals, especially those not highly soluble in the acceptor means.

Documents US2013/138384A1, DE3520489C1 and WO2017/111148A1 can be useful to understand the invention disclosed herein.

### Summary of the invention

It is an object of the present invention to provide a permeation cell, or diffusion cell, which allows the permeation surface to be easily varied.

At least such an object, and others which shall be apparent in light of the present description, is achieved by means of kit according to claim 1.

Preferably, the central hole of the support disc has a dimension ranging between 1 and 3 cm².

In particular, it is preferable that the central hole is circular or substantially circular. Optionally, the central hole has an inner diameter ranging between 11 and 36 mm; preferably between 11 and 20 mm.

The central hole, which is a through hole, substantially is an opening or a window. In particular, the central hole is an opening of the two opposed faces of the support disc.

Optionally, the support disc is provided with a single central hole.

Optionally, the central hole is divided into portions, or quadrants, for example by means of a cross-shaped element.

Optionally, the overall width of the permeation cell ranges between 30 and 55 mm. Optionally, the overall length of the permeation cell ranges between 30 and 55 mm. Optionally, the overall thickness of the permeation cell ranges between 10 and 40 mm.

Optionally, the membrane is a biological membrane, e.g. skin, intestinal mucosa, nasal mucosa, buccal mucosa, etc. In particular, the biological membrane comprises or is constituted by skin, intestinal mucosa, nasal mucosa, buccal mucosa, etc.

Preferably, the membrane and the support disc are coaxial to each other.

The permeation cell comprises a first body and a second body provided with a respective cavity, i.e. the bodies are hollow, and the first body and the second body are fastened to each other by means of fastening means.

Preferably, said at least one support disc and said membrane are arranged between the first body and the second body;
whereby a substance may pass from the cavity of the first body, or of the second body, to the cavity of the second body, or of the first body, through the central hole of the support disc and through the membrane.

The aforesaid dimension of the central hole defines the permeation surface, in particular the permeation surface available for the passage of a substance through the membrane from one cavity to the other.

Optionally, the central hole is the only passage available for the substances to pass through the membrane from one cavity to the other.

Typically, the first body defines or forms the acceptor compartment of the cell, and the second body defines or forms the donor compartment of the cell.

In particular, the acceptor compartment and the donor compartment are defined or delimited by the respective body and by the membrane support-disc and by the membrane.

Optionally, the support disc comprises a flange from which a skirt extends in distal direction from the membrane, the skirt preferably having a cylindrical side wall. The skirt is inserted in one of the two bodies.

Optionally, said fastening means comprise or are constituted by magnetic fastening means.

Optionally, said magnetic fastening means are magnetic cylinders.

Optionally, said magnetic fastening means comprise first magnetic fastening means arranged at the vertexes of a first component of the permeation cell and second magnetic fastening means arranged at the vertexes of a second component of the permeation cell;
said first magnetic fastening means being adapted to interact with the second magnetic fastening means.

Optionally, said first component is the first body and said second component is the second body.

Optionally, said first magnetic fastening means and said second magnetic fastening means are analogous to each other.

Optionally, said first magnetic fastening means and said second magnetic fastening means are magnetic cylinders.

Optionally, the membrane rests on - preferably directly rests on - the support disc. In particular, it is preferable that the membrane rests on one of the two faces of the support disc.

Optionally, the permeation cell comprises a seal arranged around the support disc. The seal prevents undesired leaks of liquid or of the sample in general from the cell. Optionally, said seal is arranged in a groove of the first body or of the second body. Optionally, the permeation cell comprises two support discs between which the membrane is interposed.

Preferably, said two support discs are identical to each other.

Optionally, the first body and the second body are equal to each other or are different from each other.

Optionally, the permeation cell comprises two seals arranged around a respective support disc.

Optionally, a first seal is accommodated in a groove of the first body and a second seal is accommodated in a groove of the second body.

Optionally, the permeation cell is a vertical-diffusion cell and comprises only one support disc, and the second body, which is destined to be the upper body, is different with respect to the first body, which is destined to be the lower body.

Optionally, the cavity of the second body, in particular in a vertical cell, has an inner funnel shape and is closed at the outer side by a removable cap or lid provided with a hole, in particular an aeration hole for keeping the pressure constant.

In particular in a horizontal cell, the first body and the second body have two opposed holes, of which a first hole serves for the inlet of the fluid and a second hole serves for the outlet of the fluid; said fluid being preferably an aqueous liquid; at least one of the holes being adapted to be connected to a pump which feeds the permeation cell.

The first body or the second body is provided with a housing for accommodating a magnetic mixing element, which is a magnetic bar.

Said housing is obtained in a wall that delimits the cavity of the first body or of the second body; said housing being a recess of said wall.

The first body and the second body are each provided with a housing for accommodating a respective magnetic mixing element, which is a magnetic bar.

A first housing is obtained in a wall that delimits the cavity of the first body; and a second housing is obtained in a wall that delimits the cavity of the second body; said first housing and said second housing being a recess of the respective wall.

Optionally, housings adapted to house a magnetic bar are made in the inner vertical surface and/or in the base of the cavity of the first body and of the second body.

The permeation cell in general comprises magnetic bars. For example, a magnetic bar may be arranged in the acceptor compartment and/or a magnetic bar may be arranged in the donor compartment.

Optionally, the first body and the second body substantially are parallelepiped-shaped.

Optionally, the first body and the second body are side-by-side each other on the side of the two respective cavities, the cavities being separated from one another by said at least one support disc.

Optionally, the only difference between the support disc and said further support disc is the dimension of the respective central hole.

Advantageously, a permeation cell according to the invention is hydrodynamically suitable for the diffusion process.

Advantageously, the support disc of the membrane, or membrane-support disc, is provided with the hole in the middle and is interchangeable with other equal discs which differ only in the inner diameter of the hole, which determines the diffusion area.

Advantageously, it is sufficient to replace the support disc alone of the membrane in order to vary the permeation surface of the cell.

According to one aspect, the cell according to the invention also allows the formation of air bubbles below the permeation surface to be avoided, and is also suitable for the study of transmucosal permeation.

Those skilled in the art are aware of the fact that typically a vertical-diffusion permeation cell is used so that the membrane (in particular, its two largest sides) substantially is parallel to the resting plane of the cell.

Moreover, those skilled in the art are aware of the fact that typically a horizontal-diffusion permeation cell is used so that the membrane substantially is orthogonal to the resting plane of the cell.

Further features and advantages of the invention will become more apparent in light of the detailed description of non-exclusive embodiments thereof.

The dependent claims describe particular embodiments of the invention.

### Brief description of the drawings

The following description refers to the accompanying drawings, which are provided by way of a non-limiting example, in which:
Figure 1a shows a first exploded view of a permeation cell, in particular a horizontal-diffusion permeation cell, according to one example of the invention;
Figure 1b shows another exploded view of the cell in Fig. 1a, in which the permeation cell is rotated with respect to Fig. 1a;
Figure 2 shows an exploded view of a permeation cell, in particular a vertical-diffusion permeation cell, according to another example of the invention;
Figure 3 shows a graph showing the results of an experimental test;
Figure 4 shows a graph showing the results of another experimental test.

The same reference numerals indicate the same elements or components.

### Detailed description of embodiments of the invention

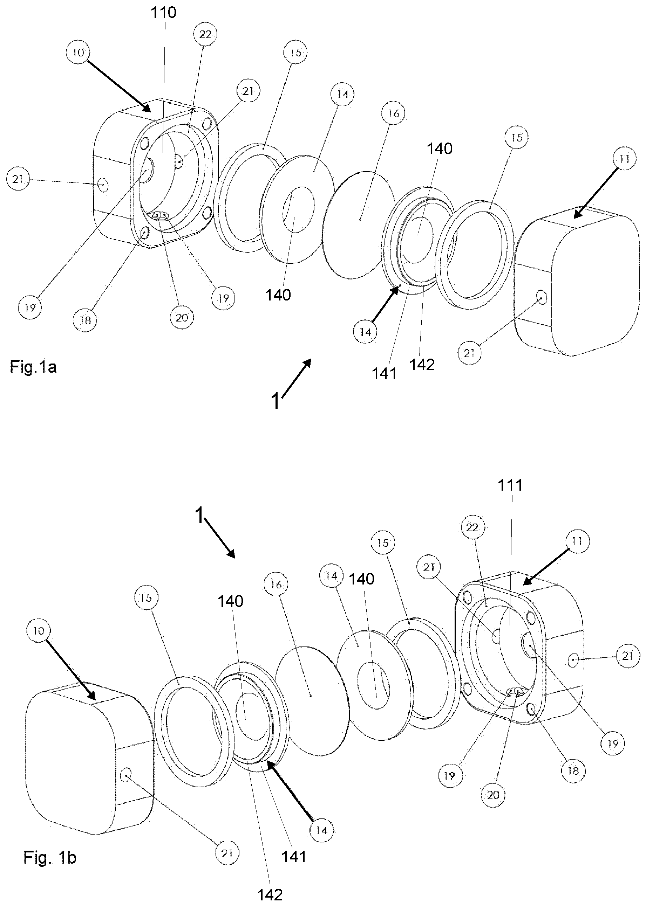

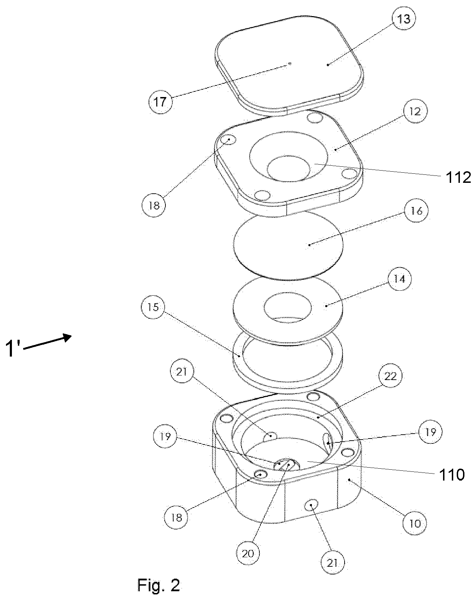

With reference to figures 1a, 1b and 2, a permeation cell 1, 1', either horizontal or vertical, according to the invention comprises, or substantially is constituted by, two hollow bodies, also called first body and second body for descriptive purposes. The hollow bodies are indicated with numerals 10 and 11, respectively, for the permeation cell 1 (Figures 1a, 1b, horizontal-diffusion cell). For the permeation cell 1' (Fig. 2, vertical-diffusion cell), the hollow bodies are indicated with numerals 10 and 12, respectively. Preferably, the hollow bodies 10, 11, 12 essentially are parallelepiped-shaped. The hollow body 10 and the hollow body 11, 12 define or constitute the acceptor compartment and the donor compartment, respectively, of the permeation cell 1, 1'.

Said two hollow bodies 10, 11, 12 are side-by-side each other on the side of the two respective cavities 110, 111, 112, such cavities being separated from each other by at least one membrane-support disc 14, (also called support disc) perforated in the middle (i.e. with a hole 140 in the middle) on which membrane 16 is resting. The sizes of the hole determine the permeation surface. Advantageously, the permeation surface may be easily changed by changing the membrane-support disc 14.

Optionally, the support disc 14 comprises a flange 141 from which a skirt 142 extends, which preferably has a cylindrical side wall, the skirt extending in distal direction from membrane 16. Skirt 142 is inserted in one of the two bodies 10, 11.

Preferably, there are provided suitable seals 15 arranged around the circumference of the membrane-support disc 14 and preferably accommodated in a respective groove 22 made in the hollow body/bodies 10, 11. The seals 15 prevent undesired leaks of liquid or of sample in general.

Preferably, seal 15 is arranged around the aforesaid skirt 142 and rests on flange 141 of the membrane support-disc 14.

As depicted in Figure 1a, 1b, the horizontal-diffusion cell 1 preferably is exactly symmetrical with respect to the membrane 16 and therefore comprises two identical or substantially identical hollow bodies 10, 11 and two membrane support-discs 14 between which the membrane 16 is inserted.

As depicted in Figure 2, the vertical-diffusion cell 1' instead preferably has one membrane-support disc 14 only. Preferably, cavity 112 (which substantially is the donor compartment) of the hollow body 12 (i.e. the upper hollow body) may be different with respect to cavity 110 (which substantially is the acceptor compartment) of body 10 (i.e. the lower hollow body). For example, cavity 112 may have a cylindrical or funnel inner shape (as shown in Figure 2) so as to facilitate the placement of the sample in any state it is in (solid, liquid or semi-solid). The aforesaid funnel shape preferably has decreasing diameter towards the membrane 16. The funnel shape is for example, defined by a truncated-conical wall.

Moreover, the cavity 112 of body 12 preferably is closed at the outer side by a removable cap or lid 13. Lid 13 preferably is provided with an aeration hole 17, in particular to keep the pressure constant.

The cavity 110 of body 10 preferably is delimited by a substantially cylindrical wall both for cell 1 and for cell 1'.

Optionally, in all embodiments, the acceptor compartment, defined by cavity 110, by the support disc 14 and by the membrane 16, preferably has a volume ranging between 3 and 20 ml.

Optionally, in all embodiments, the donor compartment, defined by cavity 111, by the support disc 14 and by membrane 16, preferably has a volume ranging between 3 and 50 ml.

Optionally, in all embodiments, the donor compartment, defined by cavity 112, by the support disc 14 and by membrane 16, preferably has a volume ranging between 0.2 and 3 ml.

In the permeation cell 1, which in particular is a horizontal-diffusion permeation cell, the body 10, in particular the acceptor compartment, and also the body 11, in particular the donor compartment, has opposed holes 21 for the inlet and the outlet of the liquid, and preferably for the connection to the pump that feeds the cell.

In the permeation cell 1', which in particular is a vertical-diffusion permeation cell, body 10, i.e. the lower body, in particular the acceptor compartment, has opposed holes 21 for the inlet and the outlet of the liquid, and preferably for the connection to the pump that feeds the cell.

The aforesaid holes 21 of body 10 and of body 11 are made in a side wall of the respective body, said wall being transverse with respect to the bottom wall of the respective cavity 110, 111.

Optionally, the wall which delimits the aforesaid holes 21 is threaded.

Optionally, housings 19 adapted to house a magnetic bar 20 for mixing the solution (i.e. of the sample) are made on the inner vertical surface and/or in the base of the chambers 10 and 11.

The above-described hollow bodies may be connected to each other by fastening means (screws, screw/nut, etc.), preferably by means of magnetic means, for example magnetic cylinders 18 preferably arranged at the vertexes of a component (possibly embedded or incorporated in the material forming it) and capable of interacting with analogous means or magnetic cylinders arranged on the vertexes of another component or compartment.

Such components provided with magnetic means preferably are the hollow bodies themselves.

Preferably, when the lid 13 is provided, the latter is fastened to the body 12 by means of magnetic means, e.g. magnetic cylinders. Such magnetic means preferably are arranged at the vertexes of lid 13 and at the vertexes of body 12.

Preferably, the cells 1, 1' according to the invention are made by means of casting molds preferably using bi-component epoxy resins. This technique ensures an increased accuracy in the details and repeatability in the production in series, thus allowing the interchangeability of all the components thereof.

The use of the resin gives a cell an increased chemical stability. Indeed, this material is compatible with most of the solvents used in permeations tests, such as for example: aqueous ethanol or methanol mixes and aqueous mixes of salts, acids or bases in a pH range between 2.5 and 12. Moreover, this specific resin has an increased thermal stability which ensures the non-deformability thereof up to temperatures close to 70°C.

The couplings, or magnetic means, embedded in the resin, improve the functionality, practicality and assembly speed, the cleaning and also the ergonomic aspect and appearance thereof.

The insertion in the acceptor compartment of specific connectors for tubes in the holes 21, preferably threaded holes, of the bodies allows the inlet and outlet circulation of the acceptor fluid with a perfect hydraulic or hydrodynamic seal.

The interchangeable support for the membrane allows the permeation surface to be varied according to experimental needs in a range between 1.0 and 10.0 cm², preferably between 1 and 3 cm², which corresponds to the dimension of the central hole 140, i.e. to the section area thereof.

The interchangeable donor compartment 12 in the vertical-diffusion cell allows both the capacity and the permeation surface to be modified according to experimental needs.

In other words, the body 12 may be replaced by a body provided with a cavity having different volume or capacity.

The cell may also be used to study gas permeation through various materials.

The cell may operate both in dynamic manner connected to a pump and in static manner connected to a tank, which allows the simultaneous drawing and restoring of the acceptor fluid to be carried out, thus avoiding the unpleasant formation of air bubbles below the membrane.

It is worth noting that the present invention advantageously provides a permeation cell which allows the permeation surface, and optionally also the volume of the acceptor means, to be quickly and simply varied without needing to completely replace the cell itself.

A further advantageous aspect of the invention lies in the increased reproducibility of experimental data which may be obtained with the permeation cells.

Such an advantage is also achieved when operating with a plurality of cells that are constructively identical to one another, experimental conditions being equal.

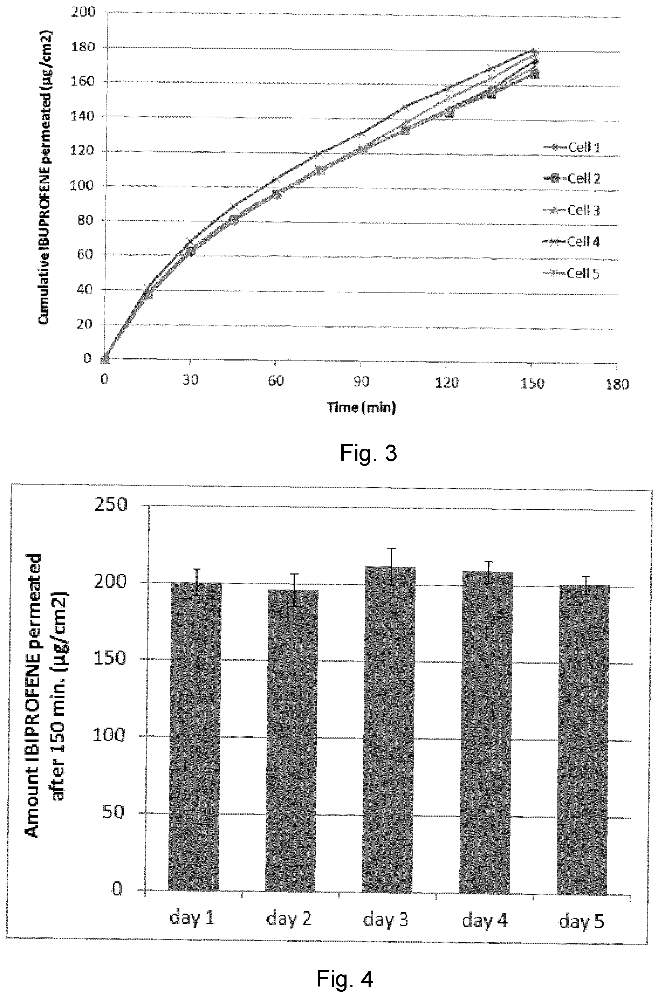

This advantageous aspect may be better appreciated with reference to Figures 3 and 4.

Figures 3 and 4 are representative of experimental results of permeation tests, i.e. tests for assessing the capacity of a compound to diffuse from a donor compartment to an acceptor compartment.

In particular, such tests were conducted using a synthetic PVDF (polyvinylidene difluoride) membrane pre-treated with a 1% solution (w/v) of lecithin in dodecane.

The permeability of 100 µL of 1% (w/v) ibuprofen in PBS pH 7.4 in five constructively identical cells was simultaneously measured in order to assess the variability (accuracy) between a plurality of cells. The measurement was carried out by means of spectrophotometry at 220 nm.

The results shown in Fig. 3 are expressed as cumulative quantity of permeated pharmaceutical (µg/cm²) as a function of time.

The permeability of a 1% (w/v) ibuprofen solution in PBS pH 7.4 in five constructively identical cells on five different days was assessed in order to determine the day-today assay reproducibility.

The results (average and standard deviation) are shown in Figure 4 and show high reproducibility of the tested system.

## Claims

1. A kit comprising a permeation cell (1, 1'), in particular of the horizontal- or vertical-diffusion type, provided with a membrane (16) and with at least one support disc (14) for the membrane (16);
wherein the support disc (14) is provided with a central hole (140) having a dimension ranging between 1 and 10 cm²;
the support disc (14) is adapted to be replaced with another support disc provided with a central hole having a different dimension with respect to the central hole of the support disc (14) so as to vary the permeation surface;
the kit also comprising at least one further support disc for the membrane (16), configured to replace said support disc (14) adapted to be replaced with another support disc provided with a central hole having a different dimension with respect to the central hole of the support disc (14) so as to vary the permeation surface;
the permeation cell (1, 1') comprises a first body (10) and a second body (11, 12), provided with a respective cavity (110, 111, 112), which are fastened to one another by means of fastening means (18);
in that the permeation cell (1, 1') comprises magnetic bars (20);
in that the first body (10) and the second body (11) are provided with a housing for accommodating a respective magnetic bar (20);
in that a first housing is made in a wall that delimits the cavity (110) of the first body (10); and a second housing is obtained in a wall that delimits the cavity (111) of the second body (11);
said kit being **characterized in that** said first housing and said second housing constitute a recess of the respective wall;
**in that** the first body (10) and the second body (11) have two opposed holes (21), of which a first hole serves for the inlet of a liquid and a second hole serves for the outlet of the liquid; at least one of the holes being adapted to be connected to a pump which feeds the permeation cell;
and **in that** said holes (21) of the first body (10) and of the second body (11) are made in a side wall of the respective body (10, 11), said side wall being transverse with respect to the bottom wall of the respective cavity (110, 111).

2. A kit according to claim 1, wherein the only difference between the support disc (14) and said further support disc is the dimension of the respective central hole.

3. A kit according to claim 1 or 2, wherein the support disc (14) is provided with a single central hole (140).

4. A kit according to anyone of the preceding claims wherein the first body (10) and the second body (10) are equal to each other and/or are substantially parallelepiped-shaped.

5. A kit according to claim 1, wherein said at least one support disc (14) and said membrane (16) are arranged between the first body (10) and the second body (11, 12);
whereby a substance may pass from the cavity (111, 112) of the second body (11, 12) to the cavity (110) of the first body (10) through the central hole (140) of the support disc (14) and through the membrane (16).

6. A kit according to anyone of the preceding claims, wherein said fastening means (18) comprise or are constituted by magnetic fastening means; preferably wherein said magnetic fastening means are magnetic cylinders.

7. A kit according to claim 6, wherein said magnetic fastening means comprise first magnetic fastening means arranged at the vertexes of a first component of the permeation cell (1, 1') and second magnetic fastening means arranged at the vertexes of a second component of the permeation cell (1, 1');
said first magnetic fastening means being adapted to interact with the second magnetic fastening means; preferably wherein said first component is the first body (10) and said second component is the second body (11, 12); and/or said first magnetic fastening means and said second magnetic fastening means are magnetic cylinders.

8. A kit according to any one of the preceding claims, wherein the membrane (16) rests on the support disc (14).

9. A kit according to any one of the preceding claims, wherein the permeation cell (1, 1') comprises a seal (15) arranged around the support disc (14); preferably wherein said seal (15) is arranged in a groove (22) of the first body (10) or of the second body (11, 12).

10. A kit according to anyone of the preceding claims, wherein the permeation cell (1), in particular of the horizontal-diffusion type, comprises two support discs (14) between which the membrane (16) is interposed; preferably wherein the permeation cell (1) comprises two seals (15) arranged around a respective support disc (14); preferably wherein a first seal (15) is accommodated in a groove (22) of the first body (10) and a second seal (15) is accommodated in a groove (22) of the second body (11).

11. A kit according to any one of claims 1 to 9, wherein the permeation cell (1'), in particular of the vertical-diffusion type, comprises one support disc (14) only, and wherein the second body (12), which is destined to be the upper body, is different with respect to the first body (10), which is destined to be the lower body (10); preferably wherein the cavity (112) of the second body (12) has an inner funnel shape and is closed at the outer side by a removable cap or lid (13) provided with a hole (17), in particular a hole (17) for keeping the pressure constant.

12. A kit according to any one of the preceding claims, wherein said housings (19) adapted to house a magnetic bar (20) are obtained on the inner vertical surface and/or in the base of the cavity (110) of the first body (10) and of the cavity (111) of the second body (11).

13. A kit according to any one of claims 1 to 12, wherein the first body (10) and the second body (11, 12) are side-by-side each other on the side of the two respective cavities (110, 111, 112), the cavities (110, 111, 112) being separated from one another by said at least one support disc (14).

## Patentansprüche

1. Kit, umfassend eine Permeationszelle (1, 1'), insbesondere vom Horizontal- oder Vertikaldiffusionstyp, die mit einer Membran (16) und mit mindestens einer Stützscheibe (14) für die Membran (16) versehen ist;
wobei
die Stützscheibe (14) mit einem zentralen Loch (140) mit einer Abmessung im Bereich zwischen 1 und 10 cm² versehen ist;
die Stützscheibe (14) dazu geeignet ist, durch eine andere Stützscheibe ersetzt zu werden, die mit einem zentralen Loch versehen ist, das eine andere Abmessung in Bezug auf das zentrale Loch der Stützscheibe (14) aufweist, um die Permeationsoberfläche zu variieren;
wobei das Kit auch mindestens eine weitere Stützscheibe für die Membran (16) umfasst, die dazu ausgelegt ist, die Stützscheibe (14) zu ersetzen, die dazu geeignet ist, durch eine andere Stützscheibe ersetzt zu werden, die mit einem zentralen Loch versehen ist, das eine andere Abmessung in Bezug auf das zentrale Loch der Stützscheibe (14) aufweist, um die Permeationsoberfläche zu variieren;
die Permeationszelle (1, 1') einen ersten Körper (10) und einen zweiten Körper (11, 12) umfasst, die mit jeweils einem Hohlraum (110, 111, 112) versehen sind und mittels Befestigungsmitteln (18) aneinander befestigt sind;
dass die Permeationszelle (1, 1') magnetische Stäbe (20) umfasst;
dass der erste Körper (10) und der zweite Körper (11) mit einem Gehäuse zum Aufnehmen eines jeweiligen magnetischen Stabs (20) versehen sind;
dass ein erstes Gehäuse in einer Wand hergestellt ist, die den Hohlraum (110) des ersten Körpers (10) begrenzt; und ein zweites Gehäuse in einer Wand hergestellt ist, die den Hohlraum (111) des zweiten Körpers (11) begrenzt;
wobei das Kit **dadurch gekennzeichnet ist, dass** das erste Gehäuse und das zweite Gehäuse aus einer Aussparung der jeweiligen Wand bestehen;
dass der erste Körper (10) und der zweite Körper (11) zwei gegenüberliegende Löcher (21) aufweisen, von denen ein erstes Loch zum Einlassen einer Flüssigkeit und ein zweites Loch zum Auslassen der Flüssigkeit dient; wobei mindestens eines der Löcher dazu geeignet ist, mit einer Pumpe verbunden zu werden, die die Permeationszelle speist;
und dass die Löcher (21) des ersten Körpers (10) und des zweiten Körpers (11) in einer Seitenwand des jeweiligen Körpers (10, 11) hergestellt sind, wobei die Seitenwand in Bezug auf die Bodenwand des jeweiligen Hohlraums (110, 111) quer verläuft.

2. Kit nach Anspruch 1, wobei der einzige Unterschied zwischen der Stützscheibe (14) und der weiteren Stützscheibe die Abmessung des jeweiligen zentralen Lochs ist.

3. Kit nach Anspruch 1 oder 2, wobei die Stützscheibe (14) mit einem einzigen zentralen Loch (140) versehen ist.

4. Kit nach einem der vorhergehenden Ansprüche, wobei der erste Körper (10) und der zweite Körper (10) einander gleich sind und/oder im Wesentlichen die Form eines Parallelepipeds aufweisen.

5. Kit nach Anspruch 1, wobei die mindestens eine Stützscheibe (14) und die Membran (16) zwischen dem ersten Körper (10) und dem zweiten Körper (11, 12) angeordnet sind;
wodurch eine Substanz aus dem Hohlraum (111, 112) des zweiten Körpers (11, 12) durch das zentrale Loch (140) der Stützscheibe (14) und durch die Membran (16) in den Hohlraum (110) des ersten Körpers (10) gelangen kann.

6. Kit nach einem der vorhergehenden Ansprüche, wobei die Befestigungsmittel (18) magnetische Befestigungsmittel umfassen oder daraus bestehen; wobei die magnetischen Befestigungsmittel vorzugsweise Magnetzylinder sind.

7. Kit nach Anspruch 6, wobei die magnetischen Befestigungsmittel erste magnetische Befestigungsmittel umfassen, die an den Scheitelpunkten einer ersten Komponente der Permeationszelle (1, 1') angeordnet sind, und zweite magnetische Befestigungsmittel, die an den Scheitelpunkten einer zweiten Komponente der Permeationszelle (1, 1') angeordnet sind;
wobei die ersten magnetischen Befestigungsmittel dazu geeignet sind, mit den zweiten magnetischen Befestigungsmitteln zusammenzuwirken; wobei vorzugsweise die erste Komponente der erste Körper (10) und die zweite Komponente der zweite Körper (11, 12) ist; und/oder wobei die ersten magnetischen Befestigungsmittel und die zweiten magnetischen Befestigungsmittel Magnetzylinder sind.

8. Kit nach einem der vorhergehenden Ansprüche, wobei die Membran (16) auf der Stützscheibe (14) aufliegt.

9. Kit nach einem der vorhergehenden Ansprüche, wobei die Permeationszelle (1, 1') eine Dichtung (15) umfasst, die um die Stützscheibe (14) herum angeordnet ist; wobei die Dichtung (15) vorzugsweise in einer Nut (22) des ersten Körpers (10) oder des zweiten Körpers (11, 12) angeordnet ist.

10. Kit nach einem der vorhergehenden Ansprüche, wobei die Permeationszelle (1), insbesondere vom Horizontaldiffusionstyp, zwei Stützscheiben (14) umfasst, zwischen denen die Membran (16) angeordnet ist; wobei die Permeationszelle (1) vorzugsweise zwei Dichtungen (15) umfasst, die um eine jeweilige Stützscheibe (14) angeordnet sind; wobei vorzugsweise eine erste Dichtung (15) in einer Nut (22) des ersten Körpers (10) aufgenommen ist und eine zweite Dichtung (15) in einer Nut (22) des zweiten Körpers (11) aufgenommen ist.

11. Kit nach einem der Ansprüche 1 bis 9, wobei die Permeationszelle (1'), insbesondere vom Vertikaldiffusionstyp, nur eine Stützscheibe (14) umfasst und wobei der zweite Körper (12), der als oberer Körper dienen soll, sich in Bezug auf den ersten Körper (10) unterscheidet, der als unterer Körper (10) dienen soll; wobei vorzugsweise der Hohlraum (112) des zweiten Körpers (12) innen trichterförmig ist und außen durch eine abnehmbare Kappe oder einen abnehmbaren Deckel (13) verschlossen ist, die/der mit einem Loch (17) versehen ist, insbesondere einem Loch (17) zum Aufrechterhalten des konstanten Drucks.

12. Kit nach einem der vorhergehenden Ansprüche, wobei die Gehäuse (19), die dazu geeignet sind, einen magnetischen Stab (20) aufzunehmen, an der inneren vertikalen Oberfläche und/oder an der Basis des Hohlraums (110) des ersten Körpers (10) und des Hohlraums (111) des zweiten Körpers (11) erhalten werden.

13. Kit nach einem der Ansprüche 1 bis 12, wobei der erste Körper (10) und der zweite Körper (11, 12) nebeneinander auf der Seite der beiden jeweiligen Hohlräume (110, 111, 112) liegen, wobei die Hohlräume (110, 111, 112) durch die mindestens eine Stützscheibe (14) voneinander getrennt sind.

## Revendications

1. Kit comprenant une cellule de perméation (1, 1'), en particulier du type à diffusion horizontale ou verticale, pourvu d'une membrane (16) et d'au moins un disque de support (14) pour la membrane (16) ;
dans lequel
le disque de support (14) est pourvu d'un trou central (140) ayant une dimension comprise entre 1 et 10 cm² ;
le disque de support (14) est adapté pour être remplacé par un autre disque de support pourvu d'un trou central ayant une dimension différente par rapport au trou central du disque de support (14) de manière à faire varier la surface de perméation ;
le kit comprenant également au moins un autre disque de support pour la membrane (16), configuré pour remplacer ledit disque de support (14) adapté pour être remplacé par un autre disque de support pourvu d'un trou central ayant une dimension différente par rapport au trou central du disque de support (14) de manière à faire varier la surface de perméation ;
la cellule de perméation (1, 1') comprend un premier corps (10) et un deuxième corps (11, 12), pourvus d'une cavité respective (110, 111, 112), qui sont fixés l'un à l'autre au moyen de moyens de fixation (18) ;
en ce que la cellule de perméation (1, 1') comprend des barres magnétiques (20) ;
en ce que le premier corps (10) et le deuxième corps (11) sont pourvus d'une enceinte pour recevoir une barre magnétique respective (20) ;
en ce qu'une première enceinte est réalisée dans une paroi qui délimite la cavité (110) du premier corps (10) ; et une deuxième enceinte est obtenue dans une paroi qui délimite la cavité (111) du deuxième corps (11) ;
ledit kit étant **caractérisé en ce que** ladite première enceinte et ladite deuxième enceinte constituent un évidement de la paroi respective ;
**en ce que** le premier corps (10) et le deuxième corps (11) ont deux trous opposés (21), dont un premier trou sert à l'entrée d'un liquide et un deuxième trou sert à la sortie du liquide ; au moins un des trous étant adapté pour être relié à une pompe qui alimente la cellule de perméation ;
et **en ce que** lesdits trous (21) du premier corps (10) et du deuxième corps (11) sont réalisés dans une paroi latérale du corps respectif (10, 11), ladite paroi latérale étant transversale par rapport à la paroi de fond de la cavité respective (110, 111).

2. Kit selon la revendication 1, dans lequel la seule différence entre le disque de support (14) et ledit autre disque de support est la dimension du trou central respectif.

3. Kit selon la revendication 1 ou 2, dans lequel le disque de support (14) est pourvu d'un seul trou central (140).

4. Kit selon l'une quelconque des revendications précédentes, dans lequel le premier corps (10) et le deuxième corps (10) sont égaux l'un à l'autre et/ou sont sensiblement de forme parallélépipédique.

5. Kit selon la revendication 1, dans lequel ledit au moins un disque de support (14) et ladite membrane (16) sont disposés entre le premier corps (10) et le deuxième corps (11, 12) ;
moyennant quoi une substance peut passer de la cavité (111, 112) du deuxième corps (11, 12) à la cavité (110) du premier corps (10) à travers le trou central (140) du disque de support (14) et à travers la membrane (16).

6. Kit selon l'une quelconque des revendications précédentes, dans lequel lesdits moyens de fixation (18) comprennent ou sont constitués par des moyens de fixation magnétiques ; de préférence dans lequel lesdits moyens de fixation magnétiques sont des cylindres magnétiques.

7. Kit selon la revendication 6, dans lequel lesdits moyens de fixation magnétique comprennent des premiers moyens de fixation magnétique disposés aux sommets d'un premier composant de la cellule de perméation (1, 1') et des deuxièmes moyens de fixation magnétique disposés aux sommets d'un deuxième composant de la cellule de perméation (1, 1') ;
lesdits premiers moyens de fixation magnétique étant adaptés pour interagir avec les deuxièmes moyens de fixation magnétique ; de préférence, dans lequel ledit premier composant est le premier corps (10) et ledit deuxième composant est le deuxième corps (11, 12) ; et/ou lesdits premiers moyens de fixation magnétique et lesdits deuxièmes moyens de fixation magnétique sont des cylindres magnétiques.

8. Kit selon l'une quelconque des revendications précédentes, dans lequel la membrane (16) repose sur le disque de support (14).

9. Kit selon l'une quelconque des revendications précédentes, dans lequel la cellule de perméation (1, 1') comprend un joint d'étanchéité (15) disposé autour du disque de support (14) ; de préférence dans lequel ledit joint d'étanchéité (15) est disposé dans une rainure (22) du premier corps (10) ou du deuxième corps (11, 12).

10. Kit selon l'une quelconque des revendications précédentes, dans lequel la cellule de perméation (1), en particulier du type à diffusion horizontale, comprend deux disques de support (14) entre lesquels la membrane (16) est interposée ; de préférence dans lequel la cellule de perméation (1) comprend deux joints d'étanchéité (15) disposés autour d'un disque de support respectif (14) ; de préférence dans lequel un premier joint d'étanchéité (15) est logé dans une rainure (22) du premier corps (10) et un deuxième joint d'étanchéité (15) est logé dans une rainure (22) du deuxième corps (11).

11. Kit selon l'une quelconque des revendications 1 à 9, dans lequel la cellule de perméation (1'), en particulier du type à diffusion verticale, comprend un seul disque de support (14), et dans lequel le deuxième corps (12), qui est destiné à être le corps supérieur, est différent par rapport au premier corps (10), qui est destiné à être le corps inférieur (10) ; de préférence dans lequel la cavité (112) du deuxième corps (12) a une forme d'entonnoir interne et est fermée du côté externe par un capuchon ou couvercle amovible (13) pourvu d'un trou (17), en particulier un trou (17) pour maintenir la pression constante.

12. Kit selon l'une quelconque des revendications précédentes, dans lequel lesdites enceintes (19) adaptées pour accueillir une barre magnétique (20) sont obtenues sur la surface verticale interne et/ou dans la base de la cavité (110) du premier corps (10) et de la cavité (111) du deuxième corps (11).

13. Kit selon l'une quelconque des revendications 1 à 12, dans lequel le premier corps (10) et le deuxième corps (11, 12) sont côte à côte sur le côté des deux cavités respectives (110, 111, 112), les cavités (110, 111, 112) étant séparées l'une de l'autre par ledit au moins un disque de support (14).
